# EUROPÄISCHE PATENTSCHRIFT

(11) **EP 0 592 905 B1**
(45) Veröffentlichungstag und Bekanntmachung des Hinweises auf die Patenterteilung: **26.02.1997**
(21) Anmeldenummer: 93115942.0
(22) Anmeldetag: 02.10.1993
(51) Int. Cl.: G11B 5/702

(54) **Magnetische Aufzeichnungsträger**
Magnetic recording medium
Milieu d'enregistrement magnétique

(30) Priorität: 12.10.1992 DE 4234325
(43) Veröffentlichungstag der Anmeldung: 20.04.1994
(73) Patentinhaber: BASF Magnetics GmbH, 67059 Ludwigshafen (DE)
(72) Erfinder: Bobrich, Michael, Dr., D-67459 Boehl-Iggelheim (DE); Brodt, Gregor, Dr., D-64646 Heppenheim (DE); Kress, Ria, Dr., D-67063 Ludwigshafen (DE); Melzer, Milena, D-67069 Ludwigshafen (DE); Schneider, Norbert, D-67122 Altrip (DE)
(74) Vertreter: Karau, Wolfgang, Dr.

(56) Entgegenhaltungen:
- EP-A- 0 298 611
- EP-A- 0 416 392

## Beschreibung

Die Erfindung betrifft magnetische Aufzeichnungsträger, bestehend aus einem nichtmagnetischen Trägermaterial und mindestens einer darauf haftfest aufgebrachten magnetisierbaren Schicht auf Basis eines in mindestens einem Polyharnstoffurethan und einem Polyurethanharnstoff(meth)acrylat dispergierten magnetischen Materials.

An magnetische Aufzeichnungsträger werden bezüglich Aufzeichnung, Wiedergabe und Alterungsbeständigkeit immer höhere Anforderungen gestellt. Um diesen Anforderungen gerecht zu werden, kommt dem Bindemittel eine zunehmende Bedeutung zu.

So wird zur Verbesserung der magnetischen Eigenschaften insbesondere der Remanenz eine erhöhte Packungsdichte des magnetischen Materials in der Schicht angestrebt, was eine Verringerung des Bindemittelanteils in der Schicht zur Folge hat. Ebenso wird versucht, ein verbessertes Signal-Rausch-Verhältnis und eine sehr enge Schaltfeldstärkenverteilung durch die Verwendung immer feinteiligerer magnetischer Materialien mit ausgeprägter und extrem gleichförmiger Nadelform zu erzielen. Diese Materialien werden zudem zur Verringerung von Alterserscheinungen sehr oft oberflächenmodifiziert. Bedingt durch solche Maßnahmen wird sowohl die Aufteilung der Pigmente im Dispergierprozeß als auch das Erreichen einer guten Dispersionsstabilität erheblich erschwert. Außerdem müssen die Magnetschichten aber sehr flexibel sein, eine hohe Elastizität aufweisen und eine hohe Reißfestigkeit besitzen. Daneben wird, zur Vermeidung von Pegeleinbrüchen, zunehmend eine Verringerung der Reibungswerte, eine Erhöhung der Abrieb- und Verschleißfestigkeit gefordert. Des weiteren gilt, daß diese mechanische Stabilität der Magnetschicht auch bei hohen Temperaturen und hoher Luftfeuchtigkeit gewährleistet sein muß.

Es ist bekannt, daß Magnetschichten, die starken mechanischen Beanspruchungen unterworfen werden, als Bindemittel sich vorteilhaft erweisende Polyurethanelastomere enthalten. Besonders bewährt haben sich Polyesterurethane, wie sie in der DE-B 1 106 959, DE-B 2 753 694, EP-A 0 069 955 oder in der US-A 2 899 411 beschrieben sind.

Diese Bindemittel können jedoch alle oben beschriebenen Forderungen und Maßnahmen nicht mehr ausreichend erfüllen. In vielen Fällen wird die Pigmentbenetzung und -dispergierung, insbesondere bei den sehr feinteiligen Materialien ungünstig beeinflußt, so daß eventuelle Versinterungen beim Mahlprozeß nur ungenügend zerteilt werden oder eine Agglomeration der Pigmentteilchen nicht ausreichend verhindert wird, was zu schlechten Magnetwerten und daraus resultierend zu schlechten Bandeigenschaften in puncto Elektroakustik und Videodaten führt.

Aus diesem Grund werden zur Erleichterung des Dispergiervorgangs niedermolekulare Dispergiermittel hinzugefügt. Diese Dispergiermittel weisen jedoch Nachteile auf. So können niedermolekulare Dispergiermittel bei ungünstigen Klimabedingungen, wie hohe Temperatur und/oder hohe Luftfeuchtigkeit leicht ausschwitzen. Dadurch kommt es in Aufnahme- bzw. Wiedergabegeräten zu Ablagerungen an allen bandberührten Teilen, besonders am Kopf, wodurch Pegeleinbrüche verursacht werden. Außerdem steigt die Reibung (Adhäsion) stark an, wodurch es zu einem Stillstand des Bandes, dem Blocken, kommen kann. Des weiteren weisen niedermolekulare Dispergierhilfsmittel stark polare Gruppen auf, was sich bei der Einwirkung von Wasser/Feuchtigkeit negativ bemerkbar macht. So wird die Schicht durch die Anwesenheit von polaren ionogenen Gruppen stark hydrophiliert mit der Folge einer starken Wasseraufnahme der Schicht. Dadurch wird einerseits die Schichtmechanik geschwächt, andererseits der pH-Wert der Schicht bei z.B. anionischen Gruppen wie Sulfonat- oder Phosphatgruppen deutlich in den sauren Bereich verschoben, mit der Konsequenz eines evtl. hydrolytischen Abbaus von Bindemitteln bzw. der Gefahr der Pigmentkorrosion.

Beim Einsatz von üblichen Dispergierharzen kann es andererseits zu Verträglichkeitsproblemen in der Dispersion kommen. Da diese Dispergiermittel ebenfalls polare Gruppen enthalten, nimmt die Hydrophilie der Schicht stark zu, und damit speziell im Feuchtklima auch Effekte wie Quellen der Schicht, Ausschwitzen der Dispergier- und Gleitmittel und Veränderungen im mechanischen Eigenschaftsniveau durch Veränderungen der "Weichmachereffekte".

Zur Verbesserung der Dispergiereigenschaften von Polyurethanbindemitteln wurde schon frühzeitig der Vorschlag gemacht, polare Gruppen in das Bindemittel einzubauen. Diese polaren Gruppen können prinzipiell über jede Komponente, die bei der Herstellung des Polyurethans verwendet wird, eingeführt werden. Am häufigsten ist die Verwendung von Polyestern mit polaren Gruppen (u.a. DE-A 28 33 845). Der Einbau von Diolen, die zusätzlich polare Gruppen tragen, wird beispielsweise in der JP-A 57 092 421, der DE-A 38 14 536 oder der EP-A 193 084 beschrieben. Der nachträgliche Einbau der polaren Gruppen durch S_{N}-Reaktion an den OH-Endgruppen der Polyurethane wird in JP-A 57 092 422 offenbart. Diese Dispergierharze teilen zwar einerseits die Pigmente sehr gut auf, führen aber auf der anderen Seite, speziell bei steigender Feinteiligkeit der eingesetzten Magnetpigmente, zu Dispersionen mit extrem ungünstigen rheologischen Eigenschaften, wie erhöhter Fließgrenze und erhöhter Viskosität, so daß die weitere Verarbeitung dieser Dispersionen zu Magnetschichten mit großen Schwierigkeiten verknüpft ist. Des weiteren ist der Gehalt an ionogenen dispergieraktiven Gruppen in dem Dispergierharz auf eine maximale Konzentration beschränkt, da sonst negative Effekte, wie z.B. Überbrückungsflockulation auftreten. Eine Erhöhung der Pigmentvolumen-Konzentration auf der einen Seite und eine Verringerung der Teilchengröße auf der anderen Seite ist mit dem dann notwendigen Gehalt an Dispergierharzen nicht mehr vereinbart.

Eine Verbesserung des Dispergierverhaltens konnte mit niedermolekularen, OH-gruppenhaltigen Polyurethanen, wie sie in EP 0 099 533 beschrieben sind, erreicht werden. Wesentliche Verbesserungen im Dispergierverhalten wurden mit Polyurethanharnstoff(meth)acrylaten, wie sie in der deutschen Patentanmeldung P 4141838.7 beschrieben sind, erreicht. Aber auch diese Maßnahmen reichen nicht aus, die immer feinteiligeren und oberflächenmodifizierten Pigmente zu dispergieren und die immer weiter gestiegenen Anforderungen an die magnetischen Aufzeichnungsträger bezüglich Mechanik und magnetische Werte zu erfüllen.

Der Einsatz und die Verwendung von Trialkoxisilanen zur Dispergierung von mit SiO₂ und Al₂O₃ ausgerüsteten Pigmentoberflächen ist bekannt (u.a. US-A 4 034 139, DE-A 33 30 380). Da diese Trialkoxisilane hydrolyseempfindlich sind, war ihre Handhabung und Benutzung nur unter Ausschluß von OH-Gruppen möglich, denn das Grundprinzip der Wirkungsweise basierte auf der Reaktion zwischen dem Trialkoxisilan und den OH-Gruppen der Pigmentoberfläche.

Aufgabe der vorliegenden Erfindung war es daher, magnetische Aufzeichnungsträger bereitzustellen, deren magnetische Schicht ein Bindemittel auf der Basis eines in Polyurethanharnstoffpolymeren feinverteilten magnetischen Materials enthält und durch den Zusatz eines weiteren Bindemittels eine verbesserte Verschleißfestigkeit, insbesondere bei Temperatur- und Feuchtklimabelastung, einen erhöhten Richtfaktor, eine erhöhte Remanenz, eine engere Schaltfeldverteilung sowie eine fehlerarme Schichtoberfläche aufweist. Fehlerarme magnetische Schichten mit guten Laufeigenschaften erfordern Bindemittelsysteme, welche außer der hohen Packungsdichte des magnetischen Materials, des hohen Richtfaktors, der hohen Remanenz, der engen Schaltfeldverteilung auch eine sehr stabile Magnetdisperion voraussetzen.

Überraschend wurde nun gefunden, daß sich die Aufgabe mit magnetischen Aufzeichnungsträgern, bestehend aus einem nichtmagnetischen Trägermaterial und mindestens einer darauf haftfest aufgebrachten magnetisierbaren Schicht auf der Basis eines in einer Bindemittelmischung aus mindestens einem Polyharnstoffurethan und einem Polyurethanharnstoff(meth)acrylat dispergierten magnetischen Material lösen läßt, wenn das Polyurethanharnstoff(meth)acrylat erhalten wird durch Umsetzung eines Polyacrylats auf bis zu 2 OH-Endgruppen pro Molekül und einem Molekulargewicht zwischen 200 und 50 000 mit einem Gemisch aus aliphatischen Polyisocyanaten mit einer mittleren Funktionalität von 3,0 bis 6 NCO-Gruppen pro Molekül bestehen aus
0,1 bis 10 Gew.-% eines Diisocyanats,
20 bis 80 Gew.-% eines Triisocyanats und
20 bis 60 Gew.-% eines Isocyanats mit einer Funktionalität von 4 bis 10,
mit der Maßgabe, daß pro OH-Gruppe 1,2 bis 3,0, bevorzugt 1,5 bis 2,5 NCO-Gruppen zur Reaktion gelangen und die restlichen NCO-Gruppen mit Aminoalkyltrialkoxisilanen in substituierte Harnstoffgruppen überführt werden.

In einer bevorzugten Ausgestaltung der erfindungsgemäßen magnetischen Aufzeichnungsträger wird das im Bindemittelgemisch enthaltene Polyurethanharnstoff(meth)-acrylat durch die Umsetzung eines Polyacrylats mit bis zu 2 OH-Endgruppen pro Molekül und einem Molekulargewicht von insbesondere 400 bis 4000 mit dem genannten Gemisch aus aliphatischen Polyisocyanaten mit einer mittleren Funktionalität von 3,5 bis 5,5 NCO-Gruppen pro Molekül besteht, erhalten. Hierzu eignet sich insbesondere ein Gemisch, das aus
0,3 bis 8 Gew.-% eines Diisocyanats,
30 bis 70 Gew.-% eines Triisocyanats und
20 bis 50 Gew.-% eines Isocyanats mit einer Funktionalität von 4 bis 10
zusammengesetzt ist.

Das für die Herstellung des Polyurethanharnstoff(meth)-acrylats herangezogene Polyacrylat ist ein Veresterungsprodukt aus (Meth)acrylsäure und einer Alkoholkomponente mit einem C₁- bis C₂₅-Alkylrest und 0 bis 2,5 % von einem Hydroxyalkyl(meth)acrylat mit einem C₁- bis C₂₅-Alkylrest. Geeignete Alkylreste sind beispielsweiseMethyl, Ethyl, Propyl, Butyl, Isopropyl, tert. Butyl, Pentyl, Nonyl oder Stearyl. Geeignete Hydroxialkyl-(meth)acrylate sind u.a. Ethandiolmonoacrylat, Propan-diolmonoacrylat.
Des weiteren ist es auch vorteilhaft, bei der Polymerisation die OH-Gruppen aus den Kettenenden über OH-gruppenhaltige Polymerisationsinitiatoren, wie z.B. Hydroxiperoxide oder OH-gruppenhaltige Regler, wie z.B. tert. Butanol, Mercaptoethanol oder Ethanolamin abzustoppen.

Bei der Herstellung des Polyacrylats lassen sich auch andere bekannte Vinylmonomere einbauen, wie beispielsweise Vinylbenzol, Vinylchlorid, Vinylacetat, Vinylpropionat, Acrylamid, Acrylnitril.

Geeignete Isocyanate und deren Umsetzungsprodukte sind unter anderem Toluylendiisocyant, Diphenylmethandiisocyanat. Besonders geeignet sind aliphatische Isocyanate und deren Umsetzungsprodukte zu höhermolekularen Polyisocyanaten wie sie durch Addition von Di-, Tri- und eventuell Polyolen mit aliphatischen Diisocyanaten, bzw. durch Biuretisierung oder Cyanuratbildung entstehen. Geeignete aliphatische Diisocyanate hierfür sind z.B. Hexamethylendiisocyanat oder Isophorondiisocyanat.

Die in dem erfindungsgemäßen Aufzeichnungsträger enthaltenen Polyurethanharnstoff(meth)acrylate, die aus den beschriebenen Bausteinen aufgebaut sind, müssen für ein gutes Aufteilungsverhalten und hohe Dispersionsstabilität eine breite Molekulargewichtsverteilung aufweisen. Das Molekulargewicht beträgt zwischen 200 und 50 000, bevorzugt 500 bis 40 000 (gemessen nach GPC) mit einem mittleren MG (Gewichtsmittel) von 1 000 bis 10 000, insbesondere 2 000 bis 8 000 und bevorzugt 4 000 bis 7 000.

Werden Polyurethanharnstoffacrylate, die zu 90 % aus Di- und Triisocyanaten aufgebaut sind, verwendet, so ergeben sich instabile Dispersionen, die zu fehlerhaften Bändern führen. Bei Verwendung von vorwiegend trifunktionellen Isocyanaten ist die Pigmentaufteilung zu langsam bzw. ungenügend und die Viskosität der Dispersion steigt an. Dies führt dann zu einem sehr hohen Lösemittelanteil in der Dispersion.

Die so aufgebauten Polyurethanharnstoff(meth)acrylate weisen eine Härte nach DIN 53 157 von 20 bis 130 s, ferner einen E-Modul (Elastizitätsmodul gemäß DIN 53 457) im Bereich von 500 bis 2 500 N/mm² auf, eine Reißdehnung größer als 70 % (DIN 53 455) und eine Reißfestigkeit zwischen 25 und 70 N/mm (DIN 53 455) auf. Besonders günstig ist eine Pendelhärte (DIN 53 157) von 25 bis 125 s, ein E-Modul von 600 bis 2 000 N/mm, eine Reißdehnung von 80 bis 500 % und eine Reißfestigkeit von 25 bis 50 N/mm.

Das neben dem Polyurethanharnstoff(meth)acrylat (Komponente 1) in der die magnetische Schicht des erfindungsgemäßen magnetischen Aufzeichnungsträgers bildenden Bindemittelmischung enthaltene Polyharnstoffurethan ist vorteilhafterweise ein durch Umsetzung eines Polydiols, eines Diols und eines primären oder sekundären Aminoalkohols und gegebenenfalls eines Triols mit einem Diisocyanat erhaltenes niedermolekulares, OH-gruppenhaltiges Polyharnstoffurethan.

Solche OH-gruppenhaltigen Polyharnstoffurethane sind bekannt (EP-B 099 533, EP-A 281 873). Besonders zweckmäßig werden solche eingesetzt, welche ein Molekulargewicht zwischen 4 000 und 30 000 und eine OH-Zahl zwischen 25 und 70 bzw. ein Molekulargewicht zwischen 30 000 und 100 000 und eine OH-Zahl zwischen 10 und 25 aufweisen. In einer besonders vorteilhaften Ausgestaltung der erfindungsgemäßen magnetischen Aufzeichnungstrager enthalten die niedermolekularen OH-gruppenhaltigen Polyharnstoffurethane eine Polysiloxanverbindung, welche als organofunktionelle Polysiloxanverbindung mit zwei gegenüber Isocyanaten reaktiven Endgruppen und einem Molgewicht zwischen 300 und 4 000 in das Polyharnstoff-urethan eingebaut wird, wobei der Anteil der Polysiloxankomponente weniger als 5 und insbesondere weniger als 3 Gew.-% beträgt.

Die vorteilhaften Eigenschaften der erfindungsgemäß aufgebauten magnetischen Aufzeichnungstrager werden im Vergleich zu den unter Verwendung der üblichen thermoplastischen Polyurethanelastomeren erhaltenen auch deutlich, wenn vor dem Auftragen der Dispersion auf den Träger ein Polyisocyanat zugesetzt wird. Für die Vernetzung kann eine Vielzahl organischer Di-, Tri- oder Polyisocyanate oder Isocyanatprepolymere bis zu einem Molekulargewicht von 10 000, vorzugsweise zwischen 500 und 3 000, verwendet werden. Bevorzugt sind Polyisocyanate bzw. Isocyanatprepolymere, die mehr als zwei NCO-Gruppen pro Molekel tragen. Als besonders geeignet haben sich Polyisocyanate auf Basis von Toluylendiisocyanat, Hexamethylendiisocyanat oder Isophorondiisocyanat, die durch Polyaddition an Di- oder Triole oder durch Biuret- und Isocyanuratbildung entstehen, erwiesen. Besonders günstig ist ein Additionsprodukt von Toluylendiisocyanat an Trimethylolpropan und Di-ethylenglykol.

Die Menge an zugesetzter Polyisocyanatkomponente kann je nach den an das Aufzeichnungsmaterial gestellten Anforderungen, bezogen auf die OH-Gruppen der zu vernetzenden Bindemittel, im Unterschuß von bis zu 70 %, vorzugsweise bis zu 50 % oder im Überschuß von bis zu 100 %, vorzugsweise von bis zu 50 % erfolgen.

Das die Bindemittelmatrix der Magnetschicht der erfindungsgemäßen magnetischen Aufzeichnungsträger bildende Gemisch aus niedermolekularen OH-gruppenhaltigen Polyharnstoffurethanen und Polyurethanharnstoff(meth)acry-lat enthält das letztgenannte vorzugsweise in einer Menge von nicht mehr als 30 und insbesondere von nicht mehr als 25 Gew.-%. Für spezielle Anwendungszwecke ist es gegebenenfalls vorteilhaft, eine weitere Bindemittelkomponente in Mengen von 5 bis 50 und insbesondere von 10 bis 30 Gew.-Teilen, bezogen auf die resultierende Gesamtbindemittelmenge, zuzusetzen.

Diese zusätzlich im Bindemittelgemisch enthaltenen physikalisch trocknenden Bindemittel sind bekannt. Es handelt sich hierbei unter anderem um ein Polyvinylformal-Bindemittel, welches durch Hydrolyse eines Polymerisats eines Vinylesters und anschließender Umsetzung des Vinylalkohol-Polymeren mit Formaldehyd hergestellt wurde. Die Polyvinylformale haben zweckmäßigerweise einen vinylformalgruppengehalt von mindestens 65 Gew.-% und insbesondere mindestens 80 Gew.-%. Geeignete Polyvinylformale haben einen Gehalt an Vinylalkohol-Gruppen von 5 bis 13 Gew.-%, einen Gehalt an Vinylformalgruppen von 80 bis 88 Gew.-%, ein spezifisches Gewicht von ca. 1,2 und eine Viskosität von 50 bis 120 mPas gemessen bei 20°C mit einer Lösung von 5 g Polyvinylformal in 100 ml Phenol-Toluol (1:1).

In gleicher Weise geeignet sind neben dem Polyvinylformal Vinylchlorid-diol-mono- oder -di(meth)acrylat-Copolymerisate, die sich z.B. in an sich bekannter Weise durch Lösungscopolymerisation oder Suspensionscopolymerisation von Vinylchlorid und dem Diolmonoacrylat oder -monomethacrylat herstellen lassen. Das hierfür zum Einsatz gelangende Diolmono- oder -diacrylat oder -methacrylat ist ein Veresterungsprodukt von Acrylsäure oder Methacrylsäure mit der entsprechenden molaren Menge an aliphatischem Diol mit 2 bis 4 C-Atomen, wie Ethylenglykol, 1,4-Butandiol und bevorzugt Propandiol und 0 bis 50 Gew.-% 1,2-Propandiol besteht.

Die Copolymerisate haben zweckmäßigerweise einen Vinylchloridgehalt von 50 bis 95 Gew.-% und einen Diolacrylatgehalt oder -methacrylatgehalt von 5 bis 50 Gew.-%. Besonders geeignete Copolymerisate besitzen vorzugsweise einen Gehalt von 70 bis 90 Gew.-% Vinylchlorid und 10 bis 30 Gew.-% Diolmonoacrylat bzw. Diolmonomethacrylat. Eine 15 %ige Lösung besonders geeigneter Copolymerisate wie der Vinylchlorid-Propandiolmonoacrylat-Copolymerisate in einem Gemisch aus gleichen Volumenteilen von Tetrahydrofuran und Dioxan weist bei 25°C eine Viskosität von etwa 30 mPas auf. Der K-Wert nach H. Fikentscher (Cellulosechemie 13 (1932), S. 58ff.), der besonders geeigneten Produkte liegt zwischen 30 und 50, vorzugsweise bei etwa 40.

Außerdem lassen sich vorteilhaft Phenoxyharze, deren Konstitution mit der wiederkehrenden Formel 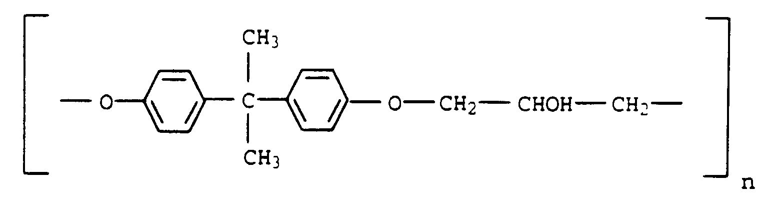 in der n annähernd gleich 100 ist, zu beschreiben ist, einsetzen. Es handelt sich hierbei um Polymere, wie sie unter den Handelsbezeichnungen Epikote® der Firma Shell Chemical Co. oder unter der Bezeichnung Epoxidharz PKHH® der Union Carbide Corporation bekannt sind.

In gleicher Weise eignen sich Celluloseester-Bindemittel zur Verwendung in dem bezeichneten Bindemittelgemisch. Dies sind Veresterungsprodukte der Cellulose mit Salpetersäure oder mit Carbonsäuren mit 1 bis 4 C-Atomen, wie z.B. Celluloseacetat, Cellulosetriacetat, Celluloseacetopropionat, Celluloseacetobutyrat.

Die weitere Verarbeitung des Bindemittelgemisches mit magnetischen Materialien und Hilfsstoffen zu den erfindungsgemäßen magnetischen Aufzeichnungsträgern erfolgt in an sich bekannter Weise.

Als anisotrope magnetische Materialien können die an sich bekannten Pigmente verwendet werden, die die Eigenschaften der resultierenden Magnetschicht wesentlich beeinflussen, wie z.B. Gamma-Eisen(III)-oxid, feinteiliger Magnetit, ferromagnetisches undotiertes oder dotiertes Chromdioxid, kobaltmodifiziertes Gamma-Eisen(III)-oxid, Bariumferrite oder ferromagnetische Metallteilchen. Bevorzugt sind nadelförmiges kobaltmodifiziertes oder unmodifiziertes Gamma-Eisen(III)-oxid sowie ferromagnetisches Chromdioxid und Metallpigment. Besonders bevorzugt sind mit SiO₂ oder Al₂O₃ ausgerüstetes kobaltmodifiziertes Gamma-Eisen(III)-oxid, ferromagnetische Metallteilchen mit einer BET 35 m²/g und ferromagnetisches undotiertes oder dotiertes Chromdioxid mit einer BET 30 m²/g. Die Teilchengröße beträgt im allgemeinen 0,2 bis 2 µm, bevorzugt ist der Bereich von 0,15 bis 0,8 µm. Besonders bevorzugt sind beliebige Abmischungen aller Pigmente untereinander.
In an sich bekannter Weite können die Magnetschichten ferner Zusätze, wie Gleitmittel und in untergeordneten, gegenüber dem Stand der Technik geringen Mengen an Dispergiermittel, aber auch Füllstoffe enthalten, die bei der Dispergierung der Magnetpigmente oder bei der Herstellung der Magnetschicht zugemischt werden. Der Einsatz der die erfindungsgemäßen magnetischen Aufzeichnungsträger charakterisierenden Bindemittel erlaubt deren Herstellung bereits unter Verwendung von höchstens 1 Gew.-% an Dispergierhilfsmittel, bezogen auf das vorhandene anorganische Material, wobei auch ohne jeglichen Zusatz eines solchen Hilfsmittels ausgezeichnete Ergebnisse erzielbar sind. Generell gilt, daß in der organischen Bindemittelmatrix niedermolekulare Verbindungen, d.h. solche mit einer Molmasse von weniger als 500, wie z.B. Gleitmittel, in einer Menge von höchstens bis zu 14 Gew.-%, bezogen auf die organische Matrix, bzw. von höchstens bis zu 4 Gew.-%, bezogen auf das magnetische Material, enthalten sind.

Das Mengenverhältnis von magnetischem Material zu Bindemittel in den erfindungsgemäßen Aufzeichnungsmaterialien liegt zwischen 1 bis 10 und insbesondere 3 bis 6 Gewichtsteilen magnetisches Material auf ein Gewichtsteil des Bindemittelgemisches. Es ist ein besonderer Vorteil, daß aufgrund des vorzüglichen Pigmentbindevermögens der speziellen Polyurethanharnstoffacrylate hohe Magnetmaterialkonzentrationen in den Magnetschichten möglich sind, ohne daß die mechanisch-elastischen Eigenschaften verschlechtert oder die Anwendungseigenschaften merklich in Mitleidenschaft gezogen werden. So sind in einfacher Weise Pigmentvolumenkonzentrationen von über 35 und bis zu 55 Vol.-% erreichbar.

Als nichtmagnetische und nichtmagnetisierbare Träger lassen sich die üblichen starren oder flexiblen Trägermaterialien verwenden, insbesondere Folien aus linearen Polyestern, wie Polyethylenterephthalat, im allgemeinen in Stärken von 4 bis 200 µm und insbesondere von 6 bis 36 µm. In neuerer Zeit ist auch die Anwendung der Magnetschichten auf Papierträgern für Zwecke der mittleren Datentechnik bedeutend geworden; auch hierfür lassen sich die erfindungsgemäßen Beschichtungsmassen vorteilhaft verwenden.

Die Herstellung der erfindungsgemäßen magnetischen Aufzeichnungsträger kann in bekannter Weise erfolgen. Zweckmäßig wird die in einer Dispergiermaschine, z.B. einer Topfkugelmühle oder einer Rührwerksmühle, aus dem magnetischen Material und einer Lösung der Bindemittel unter Zusatz von Gleitmitteln und evtl. geringen Mengen Dispergiermitteln hergestellte Magnetpigmentdispersionen nach dem Zumischen des Polyisocyanatvernetzers filtriert und mit der üblichen Beschichtungsmaschine, z.B. mittels eines Linealgießers, auf den nichtmagnetischen Träger aufgetragen. Zur Erzielung von hohen Magnet- und ELAV-Werten bei einer kürzeren Dispergierzeit ist es von Vorteil, die Dispergierung einphasig im Kneter durchzuführen und das Restlösungsmittel nach der Dispergierung einzurühren. In der Regel erfolgt eine magnetische Ausrichtung, bevor die flüssige Beschichtungsmischung auf dem Träger getrocknet wird; letzteres geschieht zweckmäßigerweise in 10 bis 200 s bei Temperaturen von 50 bis 90°C. Die Magnetschichten können auf üblichen Maschinen mittels Hindurchführen zwischen geheizten und polierten Walzen, gegebenenfalls bei Anwendung von Druck und Temperaturen von 25 bis 100°C, vorzugsweise 60 bis 90°C, geglättet und verdichtet werden. Dabei hat es sich bei vernetzenden Bindemitteln als sehr vorteilhaft erwiesen, die Kalandrierung vorzunehmen, bevor die Vernetzung abgeschlossen ist, da die OH-Polymeren in unvernetztem Zustand sehr thermoplastisch sind, ohne hierbei zu verkleben. Die Dicke der Magnetschicht beträgt im allgemeinen 0,4 bis 20 µm, vorzugsweise 0,5 bis 10 µm. Im Falle der Herstellung von Magnetbändern werden die beschichteten Folien in der Längsrichtung in den üblichen, meist nach Zoll festgelegten Breiten geschnitten.

Die erfindungsgemäßen magnetischen Aufzeichnungsträger zeichnen sich gegenüber solchen nach dem Stand der Technik durch eine verbesserte Feinrauhigkeit der Magnetschichtoberfläche, eine gesteigerte Verschleißfestigkeit insbesondere bei Temperatur- und Feuchtklimabelastung, sowie durch erhöhte magnetische Kenndaten aus. So lassen sich beispielsweise Richtfaktoren, d.h. Verhältnis der remanenten Magnetisierung längs zu quer der Orientierungsrichtung erzielen, die diejenigen übertreffen, die unter Verwendung niedermolekularer Dispergierhilfsmittel erhalten wurden.

Als Folge dieser verbesserten feinrauhen Oberflächen und erhöhter Magnetwerte steigt im Videobereich der HF-Pegel und der Chromapegel, aber auch der Hi-Fi-Pegel deutlich an. Eine weitere Konsequenz dieser verbesserten Eigenschaften ist ein größerer Störabstand, bedingt durch ein verringertes Rauschen, speziell des Modulationsrauschens, was die Notwendigkeit zur Verwendung noch feinteiligerer Magnetpigmente verringert. Die größeren Pigmentnadeln lassen sich aber bei gleichem Richtaufwand besser richten und ergeben somit höhere Remanenz- und Pegelwerte als feinteiligere Magnetpigmente. Gegenüber dem Stand der Technik kann somit der technische Aufwand zur Dispergierung, Beschichtung und Ausrichtung der Magnetschichten reduziert werden, ohne auf die Vorteile der hohen Aufzeichnungsdichte verzichten zu müssen. Durch die Verringerung des Dispergieraufwands, der Dispergierzeit, aber auch den hohen Festkörpergehalt der Dispersion sowie der Langzeitstabilität der Dispersion lassen sich die erfindungsgemäßen magnetischen Aufzeichnungsträger in einfacher und wirtschaftlicher Weise herstellen.

Die in den nachstehenden Beispielen und Vergleichsversuchen genannten Teile und Prozente beziehen sich, soweit nicht anders angegeben, auf das Gewicht. Volumenteile verhalten sich zu Gewichtsteilen wie Liter zu Kilogramm.

Das in den Beispielen eingesetzte erfindungsgemäße Polyharnstoff(meth)acrylat ist aufgebaut aus einem OH-gruppenhaltigen Acrylat mit einem mittleren Molekulargewicht von 5 000 und einem Biuretpolyisocyanat mit einer mittleren Funktionalität von 3,8, bestehend aus 0,5 % Diisocyanat, 60 % Triisocyanat und dem Rest Polyisocyanat mit einer mittleren Funktionalität von 4,8, wobei die restlichen NCO-Gruppen am Kettenende durch Aminoalkylentrialkoxisilane in substituierte Harnstoffe überführt werden.

### Beispiel 1

In einem beheizbaren Rekationsgefäß von 100 000 Volumenteilen Inhalt, ausgerüstet mit Rührer und Rückflußkühler, werden 17 482 Teile Tetrahydrofuran zum Sieden erhitzt. Innerhalb von 2 Stunden wird eine Mischung von 15 903 Teilen Methylmethacrylat, 15 903 Teilen n-Butyl-methacrylat, 403 Teilen Mercaptoethanol und 80 Teilen Azo-bis(iso-butyronitril) zudosiert. Nach einer Rührzeit von 30 min wird innerhalb weiterer 2 h eine Mischung von 132 Teilen Azo-bis(iso-butyronitril) und 257 Teilen Mercaptoethanol gelöst in 1 532 Teilen Tetrahydrofuran zugegeben. Nach 2 h wird eine Mischung von 3 384 Teilen Tetrahydrofuran, 24 Teilen Hexamethylendiisocyanat, 2 909 Teilen Biuret des Hexamethylendiisocyanates und 1 430 Teilen eines Polyisocyanates mit der mittleren Funktionalität 4,8 innerhalb von 15 min zugegeben. Nach einer Rührzeit von 30 min werden 200 Teile Dibutylzinndilaurat pro 1 000 000 Teile der Gesamtmenge zugegeben. Nach 1 h werden 2 572 Teile 3-Tri-methoxysilylpropylamin und 15 079 Teile Tetrahydrofuran zugegeben. Der K-Wert des Polymeren beträgt ca. 20, gemessen in 1 %iger Lösung in Dimethylformamid.

### Beispiel 2

In einem beheizbaren Rekationsgefäß von 200 000 Volumenteilen Inhalt, ausgerüstet mit Rührer und Rückflußkühler, werden 34 963 Teile Tetrahydrofuran zum Sieden erhitzt. Innerhalb von 2 Stunden wird eine Mischung von 31 806 Teilen Methylmethacrylat, 31 806 Teilen n-Butyl-methacrylat, 806 Teilen Mercaptoethanol und 160 Teilen Azo-bis(iso-butyronitril) zudosiert. Nach einer Rührzeit von 30 min wird innerhalb weiterer 2 h eine Mischung von 264 Teilen Azo-bis(iso-butyronitril) und 514 Teilen Mercaptoethanol gelöst in 3 063 Teilen Tetrahydrofuran zugegeben. Nach 2 h wird eine Mischung von 3 534 Teilen Tetrahydrofuran, 1 616 Teilen Methoxypropylacetat, 1 616 Teilen Xylol, 65 Teilen Hexamethylendiisocyanat, 7 758 Teilen Biuret des Hexamethylendiisocyanates und 3 814 Teilen eines Polyisocyanates mit der mittleren Funktionalität 4,8 innerhalb von 15 min zugegeben. Nach einer Rührzeit von 30 min werden 200 Teile Dibutylzinndilaurat pro 1 000 000 Teile der Gesamtmenge zugegeben. Nach 1 h werden 4 743 Teile 3-Trimethoxysilylpropylamin und 30 157 Teile Tetrahydrofuran zugegeben. Der K-Wert des Polymeren beträgt ca. 18, gemessen in 1 %iger Lösung in Dimethylformamid.

### Beispiel 3

In einem beheizbaren Rekationsgefäß von 250 000 Volumenteilen Inhalt, ausgerüstet mit Rührer und Rückflußkühler, werden 13 000 Teile Tetrahydrofuran zum Sieden erhitzt. Innerhalb von 2 Stunden wird eine Mischung von 9 800 Teilen Methylmethacrylat, 2 000 Teilen Hydroxyethylacrylat, 29 400 Teilen n-Butylacrylat, 58 880 Teilen t-Butylacrylat und 100 Teilen Azo-bis(iso-butyronitril) in 34 000 Teilen Tetrahydrofuran zudosiert. Nach einer Rührzeit von 30 min wird innerhalb weiterer 2 h eine Mischung von 200 Teilen Azo-bis(iso-butyronitril) gelöst in 20 000 Teilen Tetrahydrofuran zugegeben. Nach 2 h wird eine Mischung von 10 000 Teilen Tetrahydrofuran, 411 Teilen Methoxypropylacetat, 411 Teilen Xylol, 17 Teilen Hexamethylendiisocyanat, 1 971 Teilen Biuret des Hexamethylendiisocyanates und 969 Teilen eines Polyisocyanates mit der mittleren Funktionalität 4,8 innerhalb von 15 min zugegeben. Nach einer Rührzeit von 30 min werden 200 Teile Dibutylzinndilaurat pro 1 000 000 Teile der Gesamtmenge zugegeben. Nach 1 h werden 764 Teile N-β-Aminoethyl- -aminopropyltri-methoxysilan und 28 077 Teile Tetrahydrofuran zugege-ben. Der K-Wert des Polymeren beträgt ca. 30, gemessen in 1 %iger Lösung in Dimethylformamid.

### Beispiel 4

In einer Rührwerkskugelmühle mit einem Inhalt von 1,5 Volumenteilen, gefüllt mit 2,7 kg keramischer Kugeln mit einem Durchmesser zwischen 1 und 1,5 mm, wurden 4400 g Tetrahydrofuran, 545 g einer 50 % igen Lösung eines Polyurethanharnstoffs mit einer OH-Zahl von 55, 252 g einer 50%igen Lösung des Polyurethanharnstoffacrylats mit Trimethoxipropylsilanendgruppen nach Beispiel 1, 384 g einer 20%igen Lösung eines Polyvinylformals in Tetrahydrofuran/Dioxan 1:1, 2160 g eines mit Siliziumdioxid oberflächenausgerüsteten kobaltdotierten Eisenoxids mit einer Hc von 63 kA/m und einer mittleren Nadellänge von 0,2 µm und einer BET von 45 m²/g, 240 g eines ferromagnetischen Chromdioxids mit einer Hc von 56 kA/m mit einer mittleren Nadellänge von 0,24 µm und einer BET von 33 m²/g, 25 g Stearinsäure, 48 g Isobutylstearat eingefüllt und der Ansatz 11 Stunden dispergiert. Die Dispersion wurde dann unter Druck filtriert und unmittelbar vor dem Auftragen auf eine 15 µm dicke Polyethylenterephthalatfolie unter Rühren mit, bezogen auf 1 Teil Dispersion, mit 0,04 Teilen einer 50 % igen Lösung eines Triisocyanats aus 3 Mol Toluylendiisocyanat und 1 Mol Trimethylolpropan versehen. Die beschichtete Folie wurde nach Durchlaufen eines Magnetfeldes zur Ausrichtung der Magnetteilchen bei Temperaturen zwischen 50°C und 80°C getrocknet und durch Hindurchfuhren zwischen beheizten Walzen unter Druck (Liniendruck 200 kg/cm) geglättet.

### Beispiel 5

Es wurde wie in Beispiel 4 beschrieben verfahren, jedoch mit der Ausnahme, daß die Dispergierzeit auf 24 Stunden erhöht wurde.

### Beispiel 6

Es wurde wie in Beispiel 5 beschrieben verfahren, jedoch mit der Ausnahme, daß 90 Teile kobaltdotiertes Eisenoxid mit einer Hc von 48 kA/m und einer mittleren Nadellänge von 0,27 µm und einer BET von 25 m²/g und 240 g eines ferromagnetischen Chromdioxids mit einer Hc von 51 kA/m mit einer mittleren Nadellänge von 0,25 µm und einer BET von 33 m²/g eingesetzt wurden.

### Beispiel 7

Es wurde wie in Beispiel 4 beschrieben verfahren, jedoch mit der Ausnahme, daß die Menge an Magnetpigment um 15 Gewichts-% erhöht wurde.

### Beispiel 8

Es wurde wie in Beispiel 7 beschrieben verfahren, jedoch mit der Ausnahme, daß 40 Gewichts-% des Polyurethanharnstoffs mit einer OH-Zahl von 55 durch ein Polyurethanharnstoff mit einer OH-Zahl von 30 ersetzt wurden.

### Beispiel 9

Es wurde wie in Beispiel 4 beschrieben verfahren, jedoch mit der Ausnahme, daß der im Lösemittelgehalt reduzierte Ansatz 4 Stunden geknetet und danach im Dissolver verdünnt wurde.

### Beispiel 10

Es wurde wie in Beispiel 4 beschrieben verfahren, jedoch mit der Ausnahme, daß das Polyvinylformal durch den Polyurethanharnstoff mit einer OH-Zahl von 55 ersetzt wurde.

### Beispiel 11

In einer Stahlkugelmühle von 6000 Volumenteilen Inhalt, gefüllt mit 8000 Gewichtsteilen Stahlkugeln mit einem Durchmesser zwischen 4 und 6 mm, wurden 900 Gewichtsteile eines magnetischen Eisenoxids mit einer Koerzitivfeldstärke von 29 kA/m und einer BET von 26 m²/g zusammen mit 214 Gewichtsteilen einer 13 %igen Lösung eines Polyesterurethanharnstoffs mit einer OH-Zahl von 12, 28 Gewichtsteilen einer 40,2 %igen Lösung eines Polyesterurethanharnstoffs mit einer OH-Zahl von 30 und einem Polysiloxangehalt von 3 Gewichtsprozent, 72 Gewichtsteilen einer 50 %igen Lösung des Polyurethanharnstoffacrylats mit Trimethoxipropylsilanendgruppen nach Beispiel 2, 0,5 Gewichtsteilen einer Leinölfettsäure und 660 Gewichtsteilen Tetrahydrofuran/Dioxan 1:1 72 Stunden vorgemahlen, anschließend wurden zu dieser Dispersion, 478 Gewichtsteilen einer 13 %igen Lösung eines Polyesterurethanharnstoffs mit einer OH-Zahl von 12, 61,8 Gewichtsteilen einer 40,2 %igen Lösung eines Polyesterurethanharnstoffs mit einer OH-Zahl von 30 und einem Polysiloxangehalt von 3 Gewichtsprozent und 321 Gewichtsteilen Tetrahydrofuran/Dioxan 1:1 zugegeben und diese Bindemittel/Lösemittelmischung 2 Stunden eingearbeitet.

Zu dieser Dispersion wurden als Gleitmittel 0,5 Gewichtsteile eines Dimethylsilikons, 0,5 Gewichtsteile einer Leinölfettsäure, 0,1 Gewichtsteile Stearinsäure und 0,1 Gewichtsteile Ölsäure zugesetzt. Als Vernetzer wurden 36 Teile einer 50 %igen Lösung eines Triisocyanats aus 3 Mol Toluylendiisocyanat und 1 Mol Trimethylolpropan zugesetzt und die Dispersion kräftig durchgerührt. Die Dispersion wurde dann unter Druck filtriert und mit Hilfe eines Linealgießers auf eine 7,2 µm dicke Polyethylenterephthalatfolie beschichtet. Vor dem Trocknen bei 70°C bis 90°C wurde die beschichtete Folie zur Ausrichtung der magnetischen Teilchen in der Schicht durch ein homogenes Magnetfeld geführt und danach erfolgte eine Verdichtung und Glättung der Schicht durch Kalandrieren bei 70°C. Die Dicke der getrockneten Schicht betrug 4,7 µm. Die so beschichtete Folie wurde in Bänder von 3,81 mm Breite geschnitten und damit handelsubliche Kassetten bestückt.

### Vergleichsbeispiel 1

Es wurde wie in Beispiel 4 beschrieben verfahren, jedoch mit der Ausnahme, daß das Polyurethanharnstoffacrylat mit Trimethoxipropylsilanendgruppen durch einen niedermolekularen sauren Phosphorsäureester eines Fettalkoholalkoxylats ersetzt wurde.

### Vergleichsbeispiel 2

Es wurde wie in Beispiel 4 beschrieben verfahren, jedoch mit der Ausnahme, daß das Polyurethanharnstoff(meth)acrylat mit Trimethoxipropylsilanendgruppen durch ein Polyurethanharnstoff(meth)acrylat mit Harnstoffendgruppen ersetzt wurde.

### Vergleichsbeispiel 3

Es wurde wie in Beispiel 4 beschrieben verfahren, jedoch mit der Ausnahme, daß das Polyurethanharnstoff(meth)acrylat mit Trimethoxipropylsilanendgruppen in der Vorphase der Dispergierung eingesetzt wurde. Mit der 50 % igen Lösung eines Polyurethanharnstoffs mit einer OH-Zahl von 55 und der 20%igen Lösung eines Polyvinylformals in Tetrahydrofuran/Dioxan 1:1 und den Gleitmitteln wurde aufgelackt.

### Vergleichsbeispiel 4

Es wurde wie in Beispiel 4 beschrieben verfahren, jedoch mit der Ausnahme, daß das Polyurethanharnstoff(meth)acrylat mit Trimethoxipropylsilanendgruppen durch ein Polyurethanharnstoff(meth)acrylat mit Harnstoffendgruppen ersetzt wurde, weiterhin wurden 2 Gew.-% eines Phosphorsäureesters als zusätzliches Dispergiermittel zugegeben.

Die Verarbeitung der Dispersion erfolgt analog Beispiel 11.

Die Verwendung der Polyurethanharnstoff(meth)acrylate mit Trimethoxipropylsilanendgruppen führt zu stabilen warzenfreien Dispersionen, die feinrauhere glatte Oberflächen, bessere Magnetwerte und daraus resultierend ebenfalls bessere ELAV-Daten liefern. Gleichzeitig ist die Bandmechanik verbessert, erkennbar am verbesserten Laufverhalten im Feuchtklima.

**Tabelle 1**

| Glanzmessung: Es wird die Reflexion im 60°-Winkel an der unsatinierten Schicht gemessen. | | | | | |
|---|---|---|---|---|---|
| Versuch | Glanz 1 % | Glanz 2 % | Warzen 1 | Warzen 2 | rz [nm] |
| Beispiel 4 | 108 | 107 | keine | keine | 40 |
| Beispiel 5 | 108 | 106 | keine | keine | 29 |
| Beispiel 6 | 80 | 65 | keine | einige | 51 |
| Beispiel 7 | 124 | 122 | keine | keine | 25 |
| Beispiel 8 | 62 | 50 | keine | keine | 89 |
| Beispiel 9 | 114 | 114 | keine | keine | |
| Beispiel 10 | 98 | 89 | keine | keine | 41 |
| Vergleichsbeispiel 1 | 48 | 5 | wenige | viele | |
| Vergleichsbeispiel 2 | 103 | 95 | keine | etliche | 55 |
| Vergleichsbeispiel 3 | -* | - | - | - | - |
| Glanz 1: Glanzwert der unmittelbar entnommenen Dispersion Glanz 2: Glanzwert nach 24 Stunden Rollbrett Warzen 1: Warzenbeurteilung an unmittelbar entnommener Dispersion Warzen 2: Warzenbeurteilung nach 24 Stunden Rollbrett rz: Rauhigkeit -*: Der Ansatz wurde während der Mahlung mit dem Polyurethanharnstoff(meth)acrylat mit Trimethoxipropylsilanendgruppen fest, er konnte daher nicht weiter verarbeitet werden. | | | | | |

**Tabelle 2**

| Die Messung der magnetischen Eigenschaften wurde in einem Meßfeld von 360 kA/m durchgeführt. | | | | | |
|---|---|---|---|---|---|
| Versuch | H_{c} [kA/m] | Mr [mT] | Mr/Mm | Rf* | SFD** |
| Beispiel 4 | 68,2 | 137 | 0,88 | 3,2 | 0,28 |
| Beispiel 5 | 66,1 | 127 | 0,82 | 2,3 | 0,31 |
| Beispiel 6 | 55,1 | 141 | 0,83 | 2,5 | 0,29 |
| Beispiel 7 | 66,6 | 143 | 0,87 | 2,9 | 0,31 |
| Beispiel 8 | 65,8 | 137 | 0,85 | 2,8 | 0,30 |
| Beispiel 9 | 68,2 | 153 | 0,88 | 3,0 | 0,26 |
| Beispiel 10 | 65,1 | 140 | 0,83 | 2,5 | 0,31 |
| Beispiel 11 | 29,3 | 166 | 0,88 | 2,9 | 0,23 |
| Vergleichsbeispiel 1 | 53,5 | 154 | 0,84 | 2,4 | 0,28 |
| Vergleichsbeispiel 2 | 68,0 | 137 | 0,87 | 3,0 | 0,29 |
| Vergleichsbeispiel 3 | - | - | - | - | - |
| Vergleichsbeispiel 4 | 29,2 | 156 | 0,80 | 2,2 | 0,25 |

| | | | | | |
|---|---|---|---|---|---|
| * Richtfaktor, Remanenz längs zu quer | | | | | |
| ** Schaltfeldstärkenverteilung | | | | | |

Nach dem Schneiden der gemäß den Beispielen und Vergleichsbeispielen beschichteten Folien in 1/2 Zoll breite Bänder wurden die elektroakustischen und Videodaten wie folgt bestimmt:

Auf einem
* S-VHS-Recorder HRS 7000 der Firma Victor Company of Japan gegen das Bezugsband SRT-1 (0 dB) und auf einem
* VHS-Recorder der Firma Victor Company of Japan gegen das Bezugsband BRV 84 (0 dB)
wurden folgende Messungen durchgeführt:

Videopegel (Luminanzsignal): Luminanzsignal eines 100 % Weißbildes, gemessen mit dem Störspannungsmesser UPSF der Firma Rohde und Schwarz (> 100 kHz).

Videostörabstand (Video-S/N): Verhältnis des Luminanzsignals eines 100 % Weißbildes zum Rauschpegel, gemessen mit dem Störspannungsmesser UPSF der Firma Rohde und Schwarz (> 100 kHz).

Farbstörabstand (Farb S/N): Verhältnis des Farbsignals einer Rotfläche zum Rauschpegel, gemessen mit dem Störspannungsmesser UPSF der Firma Rohde und Schwarz (100 kHz - 3 MHz).

Die Meßverhältnisse sind in der Tabelle 3 angegeben.

**Tabelle 3**

| Versuch | HF-Pegel dB | S/N dB | Farb-S/N dB | FSM dB | HiFi-Pege 1,8 MHz dB |
|---|---|---|---|---|---|
| Beispiel 4 | -1,9 | -3,9 | -1,5 | -6 | -1,8 |
| Beispiel 5 | -2,6 | -3,3 | -2,0 | -5 | -2,7 |
| Beispiel 6 | +1,6 | +1,3 | +0,8 | -6 | - |
| Beispiel 7 | -1,5 | -2,5 | -0,8 | -2 | -1,2 |
| Beispiel 8 | -1,8 | -3,5 | -1,2 | -6 | -2,0 |
| Beispiel 9 | -1,0 | -1,5 | -1,0 | -1 | -0,9 |
| Beispiel 10 | -1,3 | -1,9 | -1,6 | -4 | -1,4 |
| Vergleichsbeispiel 1 | -1,6 | -4,0 | -0,7 | -8 | -2,5 |
| Vergleichsbeispiel 2 | -2,2 | -4,1 | -1,3 | -6 | -2,3 |
| Vergleichsbeispiel 3 | - | - | - | - | - |

Außerdem wurde der Dauerlauf im Feuchtklima bestimmt. Dazu wurden die Kassetten bei einem Klima von 40°C und 85 % relative. Feuchte einem Dauerbetrieb von 100 Zyklen à 2 Stunden unterworfen. Die Meßergebnisse sind in Tabelle 4 angegeben.

**Tabelle 4**

| Versuch | Dauerlauf |
|---|---|
| Beispiel 4 | i. O. |
| Beispiel 5 | i. O. |
| Beispiel 6 | i. O. |
| Beispiel 7 | i. O. |
| Beispiel 8 | i. O. |
| Beispiel 9 | i. O. |
| Beispiel 10 | i. O. |
| Vergleichsbeispiel 1 | schmiert die Köpfe zu, cinching |
| Vergleichsbeispiel 2 | i. O. |
| Vergleichsbeispiel 3 | - |

**Tabelle 5**

| Die elektroakustischen Test erfolgten gegen das IEC 1-Referenzband (in dB). | | | | |
|---|---|---|---|---|
| Versuch | Empfindlichkeit | | Aussteuerbarkeit | |
| | 333 Hz | 10 kHz | 333 Hz | 10 kHz |
| Beispiel 11 | 0 | +1,4 | +0,9 | +1,0 |
| Vergleichsbeispiel 4 | -0,6 | +1,4 | -0,8 | +1,0 |

### Mechanische Tests

### Test 1: Verklebungsneigung nach Warmlagerung

Bei diesem Test wird geprüft, welche Kraft notwendig ist, um evtl. auftretende Verklebungskräfte Schicht/Folie beim Abwickeln zu überwinden.

Dazu wurde das zu prüfende Band in eine Kompaktkassette (Typ C 90) konfektioniert, unter definiertem Drehmoment aufgewickelt, 8 Stunden bei 85°C gelagert und anschließend ungebremst die auftretenden Verklebungskrafte gemessen. Als Vergleichswert dient jeweils die unmittelbare in Kernnähe auftretende maximale Rückhaltekraft (Angabe in cN).

### Test 2: Wow und Flutter nach Warmlagerung

Compactcassetten mit schlechten Laufeigenschaften neigen nach Warmlagerung zu erhöhtem Wow und Flutter. Besonders kritisch ist dabei das erste Abspielen nach der Warmlagerung. Gemessen wurde das Wow und Flutterverhalten nach IEC 386, Maß für Geschwindigkeitsschwankungen (Angabe Modulation (%)).

**Tabelle 6**

| Versuch | Test 1 | Test 2 |
|---|---|---|
| Beispiel 11 | 0,8 | 0,3 |
| Vergleichsbeispiel 4 | 1,2 | 1,3 |

## Patentansprüche

1. Magnetischer Aufzeichnungsträger, bestehend aus einem nichtmagnetischen Trägermaterial und mindestens einer darauf haftfest aufgebrachten magnetisierbaren Schicht auf der Basis eines in der Bindemittelmischung aus mindestens einem Polyharnstoffurethan und einem Polyurethanharnstoff(meth)acrylat dispergierten magnetischen Materials, dadurch gekennzeichnet, daß das Polyurethanharnstoff(meth)-acrylat erhalten wird durch Umsetzung eines Poly-acrylats mit bis zu 2 OH-Endgruppen pro Molekül und einem Molekulargewicht zwischen 200 und 50 000 mit einem Gemisch aus aliphatischen Polyisocyanaten mit einer mittleren Funktionalität von 3,0 bis 6 NCO-Gruppen pro Molekül bestehend aus
0,1 bis 10 Gew.-% eines Diisocyanats,
20 bis 80 Gew.-% eines Triisocyanats und
20 bis 60 Gew.-% eines Isocyanats mit einer Funktionalität von 4 bis 10,
mit der Maßgabe, daß pro OH-Gruppe 1,2 bis 3,0 NCO-Gruppen zur Reaktion gelangen und die restlichen NCO-Gruppen mit Aminoalkyltrialkoxisilanen in substituierte Harnstoffgruppen überführt werden.

2. Magnetischer Aufzeichnungsträger, bestehend aus einem nichtmagnetischen Trägermaterial und mindestens einer darauf haftfest aufgebrachten magnetisierbaren Schicht auf der Basis eines in einer Bindemittelmischung aus mindestens einem Polyharnstoffurethan und einem Polyurethanharnstoff(meth)acrylat dispergierten magnetischen Materials, dadurch gekennzeichnet, daß das Polyurethanharnstoff-(meth)acrylat erhalten wird durch Umsetzung eines Polyacrylats mit bis zu 2 OH-Endgruppen pro Molekül und einem Molekulargewicht zwischen 200 und 50 000 mit einem Gemisch aus aliphatischen Polyisocyanaten mit einer mittleren Funktionalität von 3,0 bis 6 NCO-Gruppen pro Molekül bestehend aus
0,1 bis 10 Gew.-% eines Diisocyanats,
20 bis 80 Gew.-% eines Triisocyanats und
20 bis 60 Gew.-% eines Isocyanats mit einer Funktionalität von 4 bis 10,
mit der Maßgabe, daß pro OH-Gruppe 1,2 bis 3,0 NCO-Gruppen zur Reaktion gelangen und die restlichen NCO-Gruppen mit Aminoalkyltrialkoxisilanen in substituierte Harnstoffgruppen überführt werden, und daß das Polyharnstoffurethan ein thermoplastisches OH-Gruppen-haltiges durch Umsetzung eines Polydiols, eines Diols und eines primären oder sekundären Aminoalkohols und gegebenenfalls eines Triols mit einem Diisocyanat erhaltenes Polyharnstoff-urethan mit einem Molekulargewicht zwischen 4 000 und 30 000 und einer OH-Zahl von 25 bis 70 ist.

3. Magnetischer Aufzeichnungsträger, bestehend aus einem nichtmagnetischen Trägermaterial und mindestens einer darauf haftfest aufgebrachten magnetisierbaren Schicht auf der Basis eines in einer Bindemittelmischung aus mindestens einem Polyharnstoffurethan und einem Polyurethanharnstoff(meth)acrylat dispergierten magnetischen Materials, dadurch gekennzeichnet, daß das Polyurethanharnstoff-(meth)acrylat erhalten wird durch Umsetzung eines Polyacrylats mit bis zu 2 OH-Endgruppen pro Molekül und einem Molekulargewicht zwischen 200 und 50 000 mit einem Gemisch aus aliphatischen Polyisocyanaten mit einer mittleren Funktionalität von 3,0 bis 6 NCO-Gruppen pro Molekül bestehend aus
0,1 bis 10 Gew.-% eines Diisocyanats,
20 bis 80 Gew.-% eines Triisocyanats und
20 bis 60 Gew.-% eines Isocyanats mit einer Funktionalität von 4 bis 10,
mit der Maßgabe, daß pro OH-Gruppe 1,2 bis 3,0 NCO-Gruppen zur Reaktion gelangen und die restlichen NCO-Gruppen mit Aminoalkyltrialkoxisilanen in substituierte Harnstoffgruppen überführt werden, und daß das Polyharnstoffurethan ein thermoplastisches OH-Gruppen-haltiges durch Umsetzung eines Polydiols, eines Diols und eines primären oder sekundären Aminoalkohols und gegebenenfalls eines Triols mit einem Diisocyanat erhaltenes Polyharnstoffurethan mit einem Molekulargewicht zwischen 30 000 und 100 000 und einer OH-Zahl von 10 bis 25 ist.

4. Magnetische Aufzeichnungsträger gemäß Anspruch 1, dadurch gekennzeichnet, daß das Gemisch aus aliphatischen Polyisocyanaten eine mittlere Funktionalität von 3,5 bis 5,0 NCO-Gruppen pro Molekül auf-weist, mit der Maßgabe, daß pro OH-Gruppe 1,5 bis 2,5 NCO-Gruppen zur Reaktion gelangen.

5. Magnetischer Aufzeichnungsträger nach Anspruch 2 oder 3, dadurch gekennzeichnet, daß das Äquivalent-Verhältnis der Silangruppen des Silan-haltigen Polyurethanharnstoff(meth)acrylats zu den OH-Äquivalenten der OH-Gruppen-haltigen Bindemittel 0,08 bis 1 beträgt.

6. Magnetischer Aufzeichnungsträger nach Anspruch 1, dadurch gekennzeichnet, daß der Polyurethan(meth)acrylatharnstoff in einer Menge von nicht mehr als 30 Gew.-% in der organischen Matrix enthalten ist.

## Claims

1. Magnetic recording medium consisting of an unmagnetic substrate and at least one magnetizable layer which is firmly applied thereon and based on a magnetic material dispersed in the binder mixture comprising at least one polyurea urethane and one polyurethaneurea (meth)acrylate, wherein the polyurethaneurea (meth)acrylate is obtained by reacting a polyacrylate having up to 2 terminal OH groups per molecule and a molecular weight from 200 to 50,000 with a mixture of aliphatic polyisocyanates having an average functionality of from 3.0 to 6 NCO groups per molecule, consisting of
from 0.1 to 10% by weight of a diisocyanate,
from 20 to 80% by weight of a triisocyanate and
from 20 to 60% by weight of an isocyanate having a functionality of from 4 to 10,
with the proviso that from 1.2 to 3.0 NCO groups react per OH group and the remaining NCO groups are converted with aminoalkyltrialkoxysilanes into substituted urea groups.

2. Magnetic recording medium consisting of an unmagnetic substrate and at least one magnetizable layer which is firmly applied thereon and based on a magnetic material dispersed in a binder mixture comprising at least one polyurea urethane and one polyurethaneurea (meth)acrylate, wherein the polyurethaneurea (meth)acrylate is obtained by reacting a polyacrylate having up to 2 terminal OH groups per molecule and a molecular weight from 200 to 50,000 with a mixture of aliphatic polyisocyanates having an average functionality of from 3.0 to 6 NCO groups per molecule, consisting of
from 0.1 to 10% by weight of a diisocyanate,
from 20 to 80% by weight of a triisocyanate and
from 20 to 60% by weight of an isocyanate having a functionality of from 4 to 10,
with the proviso that from 1.2 to 3.0 NCO groups react per OH group and the remaining NCO groups are converted with aminoalkyltrialkoxysilanes into substituted urea groups, and that the polyureaurethane is a thermoplastic OH-containing polyureaurethane which is obtained by reacting a polydiol, a diol and a primary or secondary amino alcohol and, if required, a triol with a diisocyanate and has a molecular weight of from 4,000 to 30,000 and an OH number of from 25 to 70.

3. Magnetic recording medium consisting of an unmagnetic substrate and at least one magnetizable layer which is firmly applied thereon and based on a magnetic material dispersed in a binder mixture comprising at least one polyurea urethane and one polyurethaneurea (meth)acrylate, wherein the polyurethaneurea (meth)acrylate is obtained by reacting a polyacrylate having up to 2 terminal OH groups per molecule and a molecular weight from 200 to 50,000 with a mixture of aliphatic polyisocyanates having an average functionality of from 3.0 to 6 NCO groups per molecule, consisting of
from 0.1 to 10% by weight of a diisocyanate,
from 20 to 80% by weight of a triisocyanate and
from 20 to 60% by weight of an isocyanate having a functionality of from 4 to 10,
with the proviso that from 1.2 to 3.0 NCO groups react per OH group and the remaining NCO groups are converted with aminoalkyltrialkoxysilanes into substituted urea groups, and that the polyureaurethane is a thermoplastic OH-containing polyureaurethane which is obtained by reacting a polydiol, a diol and a primary or secondary amino alcohol and, if required, a triol with a diisocyanate and has a molecular weight of from 30,000 to 100,000 and an OH number of from 10 to 25.

4. Magnetic recording medium as claimed in claim 1, wherein the mixture of aliphatic polyisocyanates has an average functionality of from 3.5 to 5.0 NCO groups per molecule, with the proviso that from 1.5 to 2.5 NCO groups react per OH group.

5. Magnetic recording medium as claimed in claim 2 or 3, wherein the ratio of the number of equivalents of the silane groups of the silane-containing polyurethane-urea (meth)acrylate to the number of OH equivalents of the OH-containing binder is from 0.08 to 1.

6. Magnetic recording medium as claimed in claim 1, wherein the polyurethaneurea (meth)acrylate is present in an amount of not more then 30% by weight in the organic matrix.

## Revendications

1. Support d'enregistrement magnétique, constitué d'un matériau support non magnétique et d'au moins une couche magnétisable, appliquée par-dessus et adhérente, à base d'un matériau magnétique dispersé dans le mélange de liants composé d'au moins un polyuréthane d'urée et d'un polyuréthane de (méth)acrylate d'urée, caractérisé en ce que, le polyuréthane de (méth)acrylate d'urée est obtenu par réaction d'un polyacrylate ayant jusqu'à 2 groupements OH terminaux par molécule et un poids moléculaire entre 200 et 50 000, avec un mélange de polyisocyanates aliphatiques ayant une fonctionnalité moyenne de 3,0 à 6 groupements NCO par molécule, composé de :
• 0,1 à 10 % en poids d'un diisocyanate,
• 20 à 80 % en poids d'un triisocyanate, et
• 20 à 60 % en poids d'un isocyanate de fonctionnalité allant de 4 à 10,
dans la mesure où, par groupement OH, 1,2 à 3,0 groupements NCO parviennent à réagir et où les groupements NCO restants sont transformés en groupements carbamides substitués à l'aide des aminoalkyltrialkoxysilanes.

2. Support d'enregistrement magnétique, constitué d'un matériau support non magnétique et d'au moins une couche magnétisable, appliquée par-dessus et adhérente, à base d'un matériau magnétique dispersé dans le mélange de liants composé d'au moins un polyuréthane d'urée et d'un polyuréthane de (méth)acrylate d'urée, caractérisé en ce que, le polyuréthane de (méth)acrylate d'urée est obtenu par réaction d'un polyacrylate ayant jusqu'à 2 groupements OH terminaux par molécule et un poids moléculaire entre 200 et 50 000, avec un mélange de polyisocyanates aliphatiques ayant une fonctionnalité moyenne de 3,0 à 6 groupements NCO par molécule, composé de :
• 0,1 à 10 % en poids d'un diisocyanate,
• 20 à 80 % en poids d'un triisocyanate, et
• 20 à 60 % en poids d'un isocyanate de fonctionnalité allant de 4 à 10,
dans la mesure où, par groupement OH, 1,2 à 3,0 groupements NCO parviennent à réagir et où les groupements NCO restants sont transformés en groupements carbamides substitués à l'aide des aminoalkyltrialkoxysilanes, et où le polyuréthane d'urée est un polyuréthane d'urée thermoplastique contenant des groupements OH, avec un poids moléculaire entre 4 000 et 30 000 et un nombre de OH de 25 à 70, obtenu par réaction d'un polydiol, d'un diol et d'un aminoalcool primaire ou secondaire et éventuellement d'un triol avec un diisocyanate.

3. Support d'enregistrement magnétique, constitué d'un matériau support non magnétique et d'au moins une couche magnétisable, appliquée par-dessus et adhérente, à base d'un matériau magnétique dispersé dans le mélange de liants composé d'au moins un polyuréthane d'urée et d'un polyuréthane de (méth)acrylate d'urée, caractérisé en ce que, le polyuréthane de (méth)acrylate d'urée est obtenu par réaction d'un polyacrylate ayant jusqu'à 2 groupements OH terminaux par molécule et un poids moléculaire entre 200 et 50 000, avec un mélange de polyisocyanates aliphatiques ayant une fonctionnalité moyenne de 3,0 à 6 groupements NCO par molécule, composé de :
• 0,1 à 10 % en poids d'un diisocyanate,
• 20 à 80 % en poids d'un triisocyanate, et
• 20 à 60 % en poids d'un isocyanate de fonctionnalité allant de 4 à 10,
dans la mesure où, par groupement OH, 1,2 à 3,0 groupements NCO parviennent à réagir et où les groupements NCO restants sont transformés en groupements carbamides substitués à l'aide des aminoalkyltrialkoxysilanes, et où le polyuréthane d'urée est un polyuréthane d'urée thermoplastique contenant des groupements OH, avec un poids moléculaire entre 30 000 et 100 000 et un nombre de OH de 10 à 25, obtenu par réaction d'un polydiol, d'un diol et d'un aminoalcool primaire ou secondaire et éventuellement d'un triol avec un diisocyanate.

4. Support d'enregistrement magnétique selon la revendication 1, caractérisé en ce que le mélange de polyisocyanates aliphatiques présente une fonctionnalité moyenne de 3,5 à 5,0 groupements NCO par molécule, dans la mesure où, par groupement OH, 1,5 à 2,5 groupements NCO parviennent à réagir.

5. Support d'enregistrement magnétique selon la revendication 2 ou 3, caractérisé en ce que le rapport en équivalent des groupements silane du polyuréthane de (méth)acrylate d'urée contenant des silanes aux équivalents OH du liant contenant des groupements OH s'élève à 0,08 à 1.

6. Support d'enregistrement magnétique selon la revendication 1, caractérisé en ce que le polyuréthane de (méth)acrylate d'urée est contenu dans la matrice organique en une quantité ne dépassant pas 30% en poids.
